# FASCICULE DE BREVET EUROPEEN

(11) **EP 1 405 783 B1**
(45) Date de publication et mention de la délivrance du brevet: **10.08.2005**
(21) Numéro de dépôt: 03292395.5
(22) Date de dépôt: 29.09.2003
(51) Int. Cl.: B62D 35/00

(54) **Pare-chocs de véhicule comportant un spoiler articulé entre trois positions d'équilibre stable**
Stossfänger für ein Fahrzeug mit einem Spoiler, der zwischen drei stabilen Gleichgewichtspositionen verstellbar ist
Vehicle bumper comprising a spoiler actuatable between three positions of stable equilibrium

(30) Priorité: 02.10.2002 FR 0212197
(43) Date de publication de la demande: 07.04.2004
(73) Titulaire: COMPAGNIE PLASTIC OMNIUM, 69007 Lyon (FR)
(72) Inventeur: Jacquemard, Claude, 01100 Oyonnax (FR); Fayt, Arnold, 01640 Jujurieux (FR)
(74) Mandataire: Remy, Vincent Noel Paul

(56) Documents cités:
- EP-A- 1 052 151
- US-A- 4 904 016

## Description

La présente invention a trait à l'aérodynamique des véhicules.

Elle concerne un pare-chocs de véhicule qui, pour modifier l'aérodynamique de ce dernier en fonction de sa vitesse, comporte un spoiler articulé entre une position haute, qu'il occupe à basse vitesse pour permettre une circulation aisée en ville où il est nécessaire de pouvoir surmonter les obstacles que l'on y rencontre (trottoirs, dos d'âne, rampes d'accès inclinées, etc.), et une position basse qu'il occupe à vitesse élevée pour diminuer la valeur du coefficient de traînée (habituellement noté Cₓ) du véhicule et permettre ainsi de substantiels gains de consommation, tout en augmentant l'effet de sol pour accroître la tenue de route du véhicule.

Un tel pare-chocs est connu notamment de la demande de brevet français au nom de la demanderesse, publiée sous le numéro FR-2 795 039.

Ce pare-chocs, qui équipe déjà un certain nombre de véhicules sur le marché, a déjà donné et continuera de donner satisfaction aux propriétaires des véhicules équipés, notamment grâce à la polyvalence d'utilisation qu'il permet.

Toutefois, les exigences des propriétaires de véhicules vont croissant. Les constructeurs souhaitent bien entendu leur donner satisfaction.

Ainsi, on a pu récemment témoigner de l'apparition sur le marché de véhicules présentés comme ultra polyvalents, dont le propriétaire souhaite faire non seulement une utilisation routière ou autoroutière, ce qui requiert stabilité et tenue de route, mais également une utilisation tous terrains, ce qui requiert une garde au sol suffisante pour conférer au véhicule de bonnes capacités de franchissement.

Dans ces conditions, force est de constater qu'il est nécessaire d'accroître encore la polyvalence des pare-chocs, en vue notamment d'équiper de tels véhicules.

C'est dans cette perspective qu'ont été entreprises les recherches et développements ayant abouti à l'invention, laquelle propose un pare-chocs de véhicule automobile, qui comporte un bouclier ainsi qu'un spoiler articulé entre deux positions d'équilibre stable, à savoir une position haute dans laquelle il saille au moins partiellement du bouclier vers le bas, et une position basse dans laquelle il prolonge le bouclier vers le bas, le spoiler étant apte à adopter une troisième position d'équilibre stable, dite position escamotée, dans laquelle il se trouve totalement escamoté derrière le bouclier.

La position escamotée du spoiler permet d'accroître la garde au sol du véhicule, et confère donc à celui-ci des capacités de franchissement accrues, notamment pour des utilisations tous-terrains.

Le spoiler est de préférence monté à la fois pivotant autour d'un axe transversal, et coulissant suivant une direction longitudinale entre une position avant dans laquelle il se trouve à proximité du bouclier, et une position arrière dans laquelle il est écarté de celui-ci.

Suivant un mode particulier de réalisation, le pare-chocs comporte un mécanisme de débrayage propre, sous certaines conditions dites d'escamotage, à permettre le passage du spoiler de sa position haute vers sa position escamotée et, sous certaines conditions dites de déploiement, à permettre le passage du spoiler de sa position escamotée vers sa position haute.

Ce mécanisme de débrayage, qui peut commander le passage du spoiler de sa position avant vers sa position arrière et vice-versa, peut être actionné soit manuellement, à volonté, soit automatiquement en fonction des conditions auxquelles est soumis le véhicule. Il en résulte une grande flexibilité d'utilisation.

Par exemple, le mécanisme de débrayage comporte une tige dont une extrémité, dite interne, est en prise coulissante avec le spoiler, la tige étant montée coulissante entre une position déployée dans laquelle elle entraîne le spoiler vers sa position avant, et une position rétractée dans laquelle elle permet au spoiler d'occuper sa position arrière.

Suivant un mode particulier de réalisation, le mécanisme de débrayage comporte un ressort de rappel qui sollicite en permanence la tige vers sa position déployée.

Le pare-chocs peut en outre comporter une butée qui limite la course du spoiler vers le haut, cette butée étant apte à empêcher le passage du spoiler de sa position haute vers sa position escamotée.

Par exemple, le pare-chocs définit un logement derrière le bouclier, tandis que le spoiler présente, vers l'avant, une lèvre qui, en position escamotée, vient se placer dans ledit logement pour maintenir le spoiler en position escamotée.

Un dispositif de rappel peut être prévu, qui sollicite en permanence le spoiler vers le haut.

Ce dispositif de rappel comporte par exemple un ressort de traction ancré sur le spoiler, ce ressort étant taré pour permettre le passage du spoiler de sa position haute vers sa position basse, et vice-versa, en fonction de la vitesse du véhicule.

Une butée peut également être prévue, qui limite la course du spoiler vers le bas.

D'autres objets et avantages de l'invention apparaîtront à la lumière de la description qui va suivre d'un mode de réalisation, donnée à titre d'exemple non limitatif et faite en référence aux dessins annexés dans lesquels :
- la figure 1 est une vue en perspective d'un véhicule automobile équipé d'un pare-chocs muni d'un spoiler articulé ;
- la figure 2 est une vue partielle de côté illustrant l'aile avant gauche et le pare-chocs du véhicule, où le spoiler est représenté dans trois positions d'équilibre stable, à savoir une position haute, représentée en traits forts, une position basse, représentée en traits mixtes, et une position escamotée, représentée en traits discontinus ;
- la figure 3 est une vue schématique de côté illustrant la structure interne du pare-chocs représenté sur la figure 2, dans la position basse du spoiler ;
- la figure 4 est une vue analogue à la figure 3, où le spoiler est représenté dans sa position haute ;
- la figure 5 est une vue analogue aux figures 2 et 3, où le spoiler est représenté dans une position intermédiaire entre sa position haute et sa position escamotée ;
- la figure 6 est une vue analogue aux figures 3 à 5, où le spoiler est représenté dans sa position escamotée.

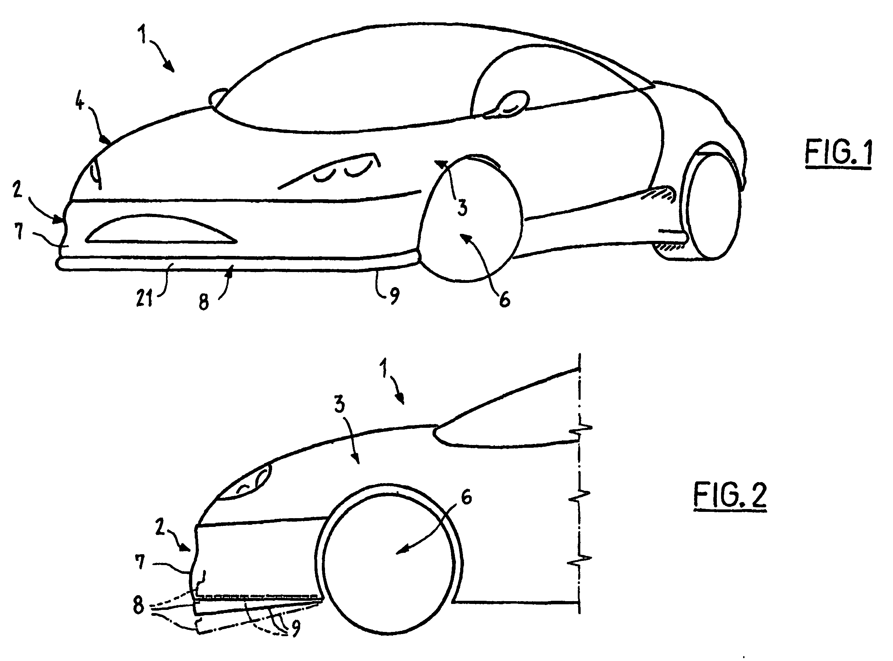

Sur la figure 1 est représenté un véhicule automobile 1 équipé d'un pare-chocs avant 2 qui s'étend entre l'aile avant gauche 3 et l'aile avant droite 4 du véhicule 1. Bien entendu, la forme proposée pour le véhicule 1 n'est que purement illustrative et ne saurait être considérée comme restrictive quant à son utilisation.

Le pare-chocs 2 comporte un bâti 5, situé devant le train avant 6 du véhicule 1, et rigidement fixé ou intégré au châssis de ce dernier. Un bouclier 7 est monté sur le bâti 5. Ce bouclier 7, également appelé peau de pare-chocs, remplit essentiellement une fonction d'enjoliveur, mais il est également, de manière classique, destiné à absorber des chocs de faible ampleur.

Le pare-chocs 2 comporte en outre un spoiler 8, également appelé bavette, monté articulé sur le bâti 5. Ce spoiler 8 est destiné, d'une part, à améliorer l'aérodynamique du véhicule 1 en diminuant, à vitesse élevée, son coefficient de traînée (Cₓ) et, d'autre part, à améliorer la tenue de route du véhicule 1 à vitesse élevée en créant un effet de sol qui, on le rappelle, tend à plaquer le véhicule 1 sur la route.

L'efficacité du spoiler 8 à vitesse élevée est d'autant meilleure que le spoiler 8 est proche du sol. Toutefois, le véhicule 1 ainsi surbaissé rencontre des difficultés à surmonter certains obstacles routiers que l'on rencontre notamment en ville : trottoirs, dos d'âne, etc.

C'est pourquoi le spoiler 8 est monté articulé entre deux positions distinctes d'équilibre stable qu'il occupe en fonction de la vitesse du véhicule 1, à savoir :
- une position haute dans laquelle le spoiler 8 saille au moins partiellement du bouclier 7 vers le bas, position qu'il occupe à basse vitesse pour permettre au véhicule 1 de surmonter certains obstacles, et
- une position basse, située sous la position haute, dans laquelle le spoiler 8 prolonge le bouclier 7 vers le bas et se trouve, en pratique, à proximité du sol, position qu'il occupe à vitesse élevée pour diminuer le coefficient de traînée du véhicule 1 et ainsi créer un effet de sol.

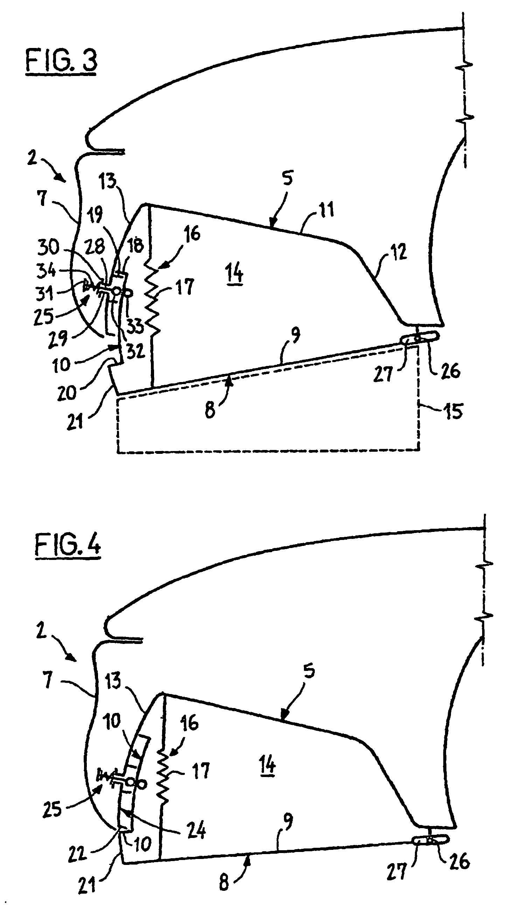

Le spoiler 8 est illustré, dans sa position haute, d'une part sur la figure 4, et d'autre part, en traits forts, sur la figure 2. Il est illustré dans sa position basse, d'une part sur la figure 3, et d'autre part, en traits mixtes, sur la figure 2.

Comme cela est visible sur les figures 3 à 6, le spoiler présente une paroi de fond 9 sensiblement plate, qui s'étend sous le véhicule 1 et forme un déflecteur qui, en modifiant l'écoulement de l'air sous le véhicule 1, en diminue le coefficient de traînée.

En position basse du spoiler 8, la paroi de fond 9 est inclinée par rapport au sol. Elle est donc plus proche du sol à l'avant qu'à l'arrière, créant ainsi sous le véhicule 1, à vitesse élevée, une dépression qui tend à le plaquer contre la route : c'est l'effet de sol.

La paroi de fond 9 est prolongée, vers l'avant, par une paroi avant 10 qui s'étend sensiblement perpendiculairement à la paroi de fond 9, derrière le bouclier 7.

Comme nous l'expliquerons ci-après, le spoiler 8 passe de l'une à l'autre de ces positions en fonction de la vitesse du véhicule 1.

Tel qu'il apparaît sur les figures 3 à 6, le bâti 5 comporte une cloison supérieure 11, prolongée vers l'arrière par une cloison arrière 12 et vers l'avant par une cloison avant 13, ces trois cloisons 11, 12, 13 définissant une cavité 14 que vient fermer le spoiler 8 lorsqu'il est monté sur le bâti 5.

Sa paroi avant 10 se trouve alors derrière la cloison avant 13 du bâti 5, en regard de celle-ci, tandis que sa paroi de fond 9 délimite sous le véhicule 1, à l'opposé de la cavité 14, un volume d'air 15.

La pression d'air qui règne au-dessus du spoiler 8, c'est-à-dire dans la cavité 14, est sensiblement constante, égale à la pression atmosphérique, et ce quelle que soit la vitesse du véhicule 1.

Par contre, la pression d'air qui règne dans le volume 15 sous le spoiler 8 dépend quant à elle de la vitesse du véhicule 1. Cette pression est sensiblement égale à la pression atmosphérique lorsque le véhicule 1 route à faible vitesse, mais elle est inférieure à la pression atmosphérique lorsque le véhicule 1 roule à vitesse élevée.

Ainsi, lorsque le véhicule 1 roule à vitesse élevée, la différence de pression entre la cavité 14 et le volume 15 tend à faire basculer le spoiler 8 vers le bas.

Par contre, lorsque la vitesse du véhicule 1 diminue, la différence de pression décroît, et le spoiler 8, soumis à un dispositif de rappel 16 qui le sollicite en permanence vers le haut, a tendance à se déplacer vers sa position haute.

Suivant un mode de réalisation illustré sur les figures 3 à 6, le dispositif de rappel 16 comporte un ressort de traction 17 tendu entre le bâti 5 d'une part, et le spoiler 8 d'autre part.

On choisira la raideur de ce ressort de traction 17 pour qu'il permette le décollement du spoiler 8 de sa position haute, en direction de sa position basse, en fonction d'une vitesse seuil minimale prédéterminée (par exemple, 60 hm/h environ) et, a contrario, le décollement du spoiler 8 de sa position basse en direction de sa position haute en fonction d'une vitesse seuil maximale prédéterminée (par exemple, 90 km/h environ).

Lorsque le véhicule 1 roule à une vitesse comprise entre la vitesse seuil minimale et la vitesse seuil maximale, le spoiler 8 oscille entre sa position haute et sa position basse.

Afin de maintenir le spoiler 8 dans sa position basse lorsque la vitesse du véhicule 1 dépasse la vitesse seuil maximale, par exemple sur autoroute, et, inversement, afin de maintenir le spoiler 8 dans sa position haute lorsque la vitesse du véhicule 1 passe sous la vitesse seuil minimale, par exemple en ville, deux butées sont prévues pour limiter la course du spoiler 8, respectivement vers le bas et vers le haut.

Ainsi, la paroi avant 10 du spoiler 8 présente, vers le haut, une extrémité libre 18 recourbée vers la cloison avant 13 du bâti 5, celle-ci présentant quant à elle une nervure 19 en saillie contre laquelle vient s'appliquer l'extrémité recourbée 18 en position basse du spoiler 8 (figure 3). Cette nervure 19 forme ainsi une première butée qui limite la course du spoiler 8 vers le bas.

Par ailleurs, la paroi avant 10 du spoiler 8 présente, à une certaine distance au-dessus de la paroi de fond 9, un épaulement 20 définissant, à l'avant du spoiler 8, une lèvre 21 qui, en position haute du spoiler 8, saille du bouclier 7 vers le bas (figure 4).

Quant à la cloison avant 13 du bâti 5, elle présente, vers le bas, un rebord 22 replié vers l'arrière, contre lequel vient se plaquer l'épaulement 20 en position haute du spoiler 8. Ce rebord 22 forme ainsi une seconde butée qui limite la course du spoiler 8 vers le haut.

Par ailleurs, outre les deux positions, haute et basse, définies ci-dessus, le spoiler 8 est apte, sous certaines conditions définies ci-après, à adopter une troisième position d'équilibre stable, dite position escamotée, située au-dessus de la position haute, dans laquelle il se trouve totalement escamoté derrière le bouclier 7 et dans laquelle la paroi de fond 9 est sensiblement parallèle au sol.

Dans cette position escamotée du spoiler 8, la garde au sol du véhicule 1 est maximale, ce qui permet le franchissement d'obstacles qui n'auraient pu être franchis en position haute du spoiler 8.

Il en résulte une meilleure polyvalence du véhicule 1, notamment pour des utilisations extrêmes tel qu'une utilisation tous terrains.

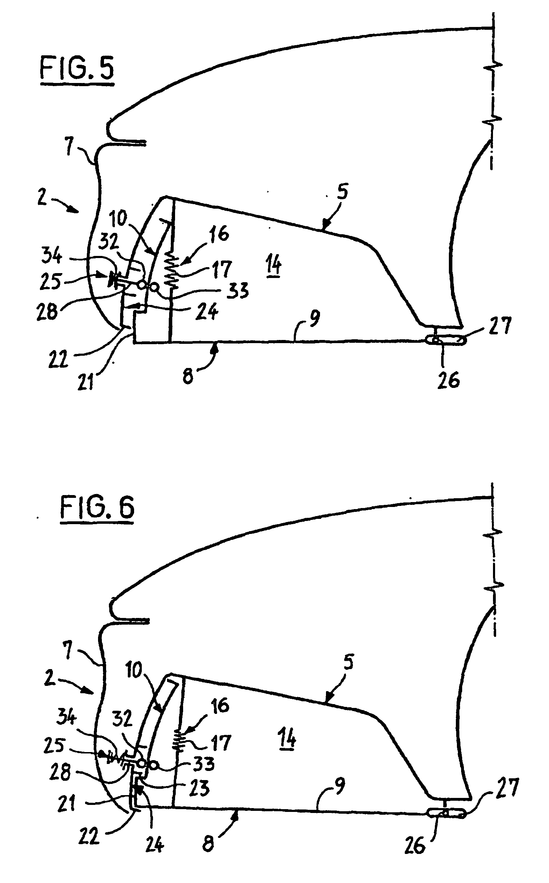

Le bâti 5 comporte une nervure 23 qui saille de la cloison avant 13 vers la cavité 14 et qui définit, conjointement avec le rebord 22 et la cloison avant 13, derrière le bouclier 7, un logement 24 dans lequel vient se placer la lèvre 21 en position escamotée du spoiler 8, tel que représenté sur la figure 6.

Le logement 24, dont la forme est sensiblement complémentaire de la lèvre 21, assure un maintien vertical bidirectionnel du spoiler 8, grâce à la nervure 23 et au rebord 22.

Tant que certaines conditions, dites d'escamotage, ne sont pas remplies, le spoiler 8 reste en position haute sans pouvoir se déplacer vers sa position escamotée.

De même, une fois en position escamotée, il y est maintenu par le positionnement de la lèvre 21 dans le logement 24 tans que certaines conditions, dites de déploiement, ne sont pas remplies.

Le pare-chocs 2 comporte un mécanisme de débrayage 25 propre à permettre, lorsque les conditions d'escamotage sont remplies, le passage du spoiler 8 de sa position haute à sa position escamotée, et, à l'inverse, lorsque les conditions de déploiement sont remplies, le passage du spoiler 8 de sa position escamotée à sa position haute.

Les conditions d'escamotage et de déploiement sont définies ci-après.

Comme cela est visible sur les figures 3 à 6, le spoiler 8 est monté, d'une part, pivotant par rapport au bâti 5, autour d'un axe transversal parallèle aux essieux du véhicule 1.

Plus précisément, le bâti 5 porte deux pions 26, disposés, l'un du côté de l'aile gauche 3, l'autre du côté de l'aile droite 4. Chaque pion 26 vient se loger dans une fenêtre 27 ménagée dans le spoiler 8 à l'arrière de celui-ci, fenêtre 27 avec lequel il forme conjointement l'articulation du spoiler 8.

Mais le spoiler 8 est également, d'autre part, monté coulissant par rapport au bâti 5, suivant une direction longitudinale, entre :
- une position avant dans laquelle sa paroi avant 10 est plaquée contre la cloison avant 13 du bâti 5, position qu'il occupe dans sa position escamotée, ainsi que dans ses positions haute et basse et dans toute position intermédiaire entre ces deux dernières, et
- une position arrière dans laquelle sa paroi avant 10 est suffisamment écartée de la cloison avant 13 du bâti 5 pour que le spoiler 8 puisse librement passer de sa position escamotée à sa position haute, et vice-versa.

Tel qu'il apparaît sur les figures 3 à 6, la fenêtre 27 se présente en fait sous la forme d'un trou oblong étendu longitudinalement, dans lequel le pion 26 peut coulisser d'avant en arrière et inversement.

Le mécanisme de débrayage 25, qui est apte à commander le passage du spoiler 8 de sa position avant vers sa position arrière, et vice-versa, comporte une tige 28 montée sur la cloison avant 13 du bâti 5 qu'elle traverse longitudinalement.

Plus précisément, la tige 28 est emmanchée dans un cylindre de guidage 29 qui, saillant de la cloison avant 13 du bâti 5 à l'opposé de la cavité 14, se termine par une extrémité libre 30 en forme de collerette.

La tige 28 présente un profil en forme de T et comporte, à son extrémité externe, située à l'extérieur de la cavité 14, une tête 31 aplatie et, à son extrémité interne opposée située à l'intérieur de la cavité 14, deux galets 32, 33 qui viennent se placer de part et d'autre de la paroi avant 10 du spoiler 8 de sorte que la tige 28 se trouve en prise coulissante avec celui-ci. De fait, la tige 28 est solidaire du spoiler 8 dans son mouvement coulissant longitudinal, mais elle le laisse libre dans son pivotement autour de son axe.

La tige 28 est montée coulissante entre une position déployée, représentée sur les figures 3, 4 et 6, dans laquelle elle tend à entraîner le spoiler 8 vers sa position avant, et une position rétractée représentée sur la figure 5, dans laquelle elle permet au spoiler 8 d'occuper sa position arrière, ou dans laquelle elle tend à l'entraîner vers cette position.

Le mécanisme de débrayage 25 comporte en outre un ressort de rappel 34 travaillant en compression qui, emmanché sur la tige 28 et interposé entre la tête 31 de celle-ci et la collerette 30 du cylindre de guidage 29, sollicite en permanence la tige 28 vers sa position déployée où elle entraîne le spoiler 8 vers sa position avant.

Lorsque le spoiler 8 est en position haute, deux conditions d'escamotage distinctes permettent son passage en position escamotée.

La première de ces conditions est une pression manuelle exercée sur la tête de tige 31 à l'encontre du ressort de rappel 34, suffisante pour provoquer la compression de celui-ci. Sous cette pression, la tige 28 s'enfonce dans la cavité 14 vers sa position rétractée en entraînant le spoiler 8 vers sa position arrière.

L'épaulement 20 est alors décalé vers l'arrière par rapport au rebord 22 qui ne peut ainsi plus jouer office de butée, le spoiler 8 étant conjointement sollicité vers le haut par le ressort de traction 17.

La lèvre 21 contourne alors le rebord 22 avant de venir se placer en regard du logement 24. Il suffit de relâcher la pression exercée sur la tige 28 pour que, sous l'effet de la dilatation du ressort de rappel 24, celle-ci se déploie en entraînant le spoiler 8 vers sa position avant par l'intermédiaire des galets 32, 33, la lèvre 21 venant se placer dans le logement 24.

La seconde de ces conditions d'escamotage est une pression exercée directement sur la lèvre 21, d'avant en arrière, suffisante pour provoquer, par l'intermédiaire des galets 32, 33, la compression du ressort de rappel 34 et la rétractation de la tige 28.

Cette pression peut être exercée manuellement. Elle peut aussi être le fruit d'un choc de la lèvre 21 du spoiler 8 contre un obstacle qu'il rencontre tout à coup, tel qu'un trottoir élevé.

Quoi qu'il en soit, le spoiler 8 se retrouve alors dans sa position arrière, qui, comme nous venons de le voir, l'autorise à basculer vers le haut, c'est-à-dire vers sa position escamotée, sous l'effet de la sollicitation exercée par le ressort de traction 17.

De la sorte, le spoiler 8 s'escamote automatiquement en cas de choc frontal avec un obstacle. Ainsi mis à l'abri, il est préservé de toute détérioration.

Lorsque le spoiler 8 se trouve, au contraire, en position escamotée, deux conditions distinctes de déploiement permettent son passage en position haute.

La première de ces conditions est une pression manuelle exercée sur la tête de tige 31 à l'encontre du ressort de rappel 34, suffisante pour provoquer la compression de celui-ci. Sous cette pression, la tige 28 s'enfonce dans la cavité 14 en entraînant le spoiler 8 vers sa position arrière.

Il suffit alors d'exercer une traction manuelle suffisante vers le bas pour vaincre la résistance opposée par le ressort de traction 17 et faire basculer le spoiler 8 vers le bas.

Une fois que la lèvre 21 a franchi le rebord 22, il suffit alors de relâcher la pression exercée sur la tige 28, qui, reprenant sa position déployée, entraîne le spoiler 8 vers sa position avant.

Le spoiler 8 occupe alors sa position haute.

La seconde des conditions de déploiement est, en cours de roulage du véhicule, une différence de pression d'air suffisante entre la cavité 14 et le volume d'air 15 sous le spoiler 8.

Sous l'effet d'une telle dépression, propre à vaincre la résistance opposée par le ressort de traction 17, le spoiler 8 a tendance à pivoter vers le bas.

La lèvre 21 glisse alors sur le rebord 22 qui est en fait légèrement incliné vers le bas, tel qu'il apparaît sur les figures 3 à 6, et forme un chemin de came qui pousse le spoiler 8 hors de son logement 24, vers l'arrière, lequel spoiler 8 entraîne la tige 28 par l'intermédiaire des galets 32, 33 vers sa position rétractée à l'encontre de son ressort de rappel 34 qui se comprime.

Une fois que le décalage de la lèvre 21 par rapport au rebord 22 est suffisant, c'est-à-dire une fois que la tige 28 a atteint sa position rétractée, le spoiler 8 est libre de basculer vers le bas sous l'effet de la dépression entre la cavité 14 et le volume 15. Il revient à sa position avant sous l'effet de la dilatation du ressort de rappel 34, aussitôt que la lèvre 21 a contourné le rebord 22, c'est-à-dire aussitôt que l'épaulement 20 a dépassé ce dernier.

Le spoiler 8 occupe alors sa position haute qu'il peut aussitôt quitter pour basculer vers le bas, tout dépendant de la différence de pression entre la cavité 14 et le volume d'air 15 sous le spoiler 8.

## Revendications

1. Pare-chocs de véhicule automobile, qui comporte un bouclier (7) ainsi qu'un spoiler (8) articulé entre deux positions d'équilibre stable, à savoir une position haute dans laquelle il saille au moins partiellement du bouclier (7) vers le bas, et une position basse dans laquelle il prolonge le bouclier (7) vers le bas, **caractérisé en ce que** le spoiler (8) est apte à adopter une troisième position d'équilibre stable, dite position escamotée, dans laquelle il se trouve totalement escamoté derrière le bouclier (7).

2. Pare-chocs selon la revendication 1, **caractérisé en ce que** le spoiler (8) est monté à la fois pivotant autour d'un axe transversal, et coulissant suivant une direction longitudinale entre une position avant dans laquelle il se trouve à proximité du bouclier (7), et une position arrière dans laquelle il est écarté de celui-ci.

3. Pare-chocs selon la revendication 1 ou 2, **caractérisé en ce qu'**il comporte un mécanisme de débrayage (25) propre, sous certaines conditions dites d'escamotage, à permettre le passage du spoiler (8) de sa position haute vers sa position escamotée et, sous certaines conditions dites de déploiement, à permettre le passage du spoiler (8) de sa position escamotée vers sa position haute.

4. Pare-chocs selon les revendications 2 et 3, prises conjointement, **caractérisé en ce que** le mécanisme de débrayage (25) est apte à commander le passage du spoiler (8) de sa position avant vers sa position arrière, et vice-versa.

5. Pare-chocs selon la revendication 4, **caractérisé en ce que** ledit mécanisme de débrayage (25) comporte une tige (28) qui, par une extrémité dite interne, est en prise coulissante avec le spoiler (8), la tige (28) étant montée coulissante entre une position déployée dans laquelle elle entraîne le spoiler (8) vers sa position avant, et une position rétractée dans laquelle elle permet au spoiler (8) d'occuper sa position arrière.

6. Pare-chocs selon la revendication 5, **caractérisé en ce que** le mécanisme de débrayage (25) comporte un ressort de rappel (34) qui sollicite en permanence la tige (28) vers sa position déployée.

7. Pare-chocs selon l'une des revendications 1 à 6, **caractérisé en ce qu'**il comporte une butée (22) qui limite la course du spoiler vers le haut, cette butée (22) étant apte à empêcher le passage du spoiler (8) de sa position haute vers sa position escamotée.

8. Pare-chocs selon l'une des revendications 1 à 7, **caractérisé en ce qu'**il définit, derrière le bouclier (7), un logement (24), et **en ce que** le spoiler (8) présente, vers l'avant, une lèvre (21) qui, en position escamotée, vient se placer dans ledit logement (24) pour maintenir le spoiler (8) en position escamotée.

9. Pare-chocs selon l'une des revendications 1 à 8, **caractérisé en ce qu'**il comporte un dispositif de rappel (16) qui sollicite en permanence le spoiler (8) vers le haut.

10. Pare-chocs selon la revendication 9, **caractérisé en ce que** ledit dispositif de rappel (16) comporte un ressort de traction (17) ancré sur le spoiler (8), ce ressort (17) étant taré pour permettre le passage du spoiler (8) de sa position haute vers sa position basse, et vice-versa, en fonction de la vitesse du véhicule.

11. Pare-chocs selon l'une des revendications 1 à 10, **caractérisé en ce qu'**il comporte une butée (19) qui limite la course du spoiler (8) vers le bas.

## Patentansprüche

1. Stoßstange eines Kraftfahrzeugs, die einen Stoßfänger (7) wie auch einen Spoiler (8) umfasst, der zwischen zwei stabilen Gleichgewichtslagen bewegbar ist, nämlich zwischen einer oberen Stellung, in welcher er zumindest teilweise nach unten über den Stoßfänger (7) hinaus steht, und einer unteren Stellung, in welcher er den Stoßfänger (7) nach unten verlängert, **dadurch gekennzeichnet, dass** der Spoiler (8) eine dritte stabile Gleichgewichtslage einnehmen kann, die als eingezogene Stellung bezeichnet wird, in welcher er vollständig hinter dem Stoßfänger (7) verschwunden ist.

2. Stoßstange nach Anspruch 1, **dadurch gekennzeichnet, dass** der Spoiler (8) so montiert ist, dass er gleichzeitig sich um eine Querachse dreht und einer Längsrichtung folgend zwischen einer vorderen Stellung, in welcher er sich in der Nähe des Stoßfängers (7) befindet, und einer hinteren Stellung, in welcher er von dieser entfernt ist, gleitet.

3. Stoßstange nach Anspruch 1 oder 2, **dadurch gekennzeichnet, dass** diese einen Entkupplungsmechanismus (25) umfasst, der geeignet ist, um unter bestimmten Bedingungen, die als Einzugsbedingungen bezeichnet werden, den Übergang des Spoilers (8) aus seiner oberen Stellung in seine eingezogene Stellung zu gestatten, und um unter bestimmten Bedingungen, die als Ausfahrbedingungen bezeichnet werden, den Übergang des Spoilers (8) aus seiner eingezogenen Stellung in seine obere Stellung zu gestatten.

4. Stoßstange nach den Ansprüchen 2 und 3, die als Ganzes **dadurch gekennzeichnet** werden, dass der Entkupplungsmechanismus (25) geeignet ist, um den Übergang des Spoilers (8) aus seiner vorderen Stellung in seine hintere Stellung und vice versa zu veranlassen.

5. Stoßstange nach Anspruch 4, **dadurch gekennzeichnet, dass** besagter Entkupplungsmechanismus (25) ein stabförmiges Teil (28) umfasst, das durch eine Extremität, die als innere Extremität bezeichnet wird, mit dem Spoiler (8) gleitend verbunden ist, wobei das stabförmige Teil (28) zwischen einer ausgefahrenen Stellung, in der es den Spoiler (8) in seine vordere Stellung führt, und einer zurückgezogenen Stellung, in der es dem Spoiler (8) gestattet, seine hintere Stellung einzunehmen, gleitend angebracht ist.

6. Stoßstange nach Anspruch 5, **dadurch gekennzeichnet, dass** der Entkupplungsmechanismus (25) eine Rückholfeder (34) umfasst, die das stabförmige Teil (28) fortwährend in seine ausgefahrene Stellung drängt.

7. Stoßstange nach einem der Ansprüche 1 bis 6, **dadurch gekennzeichnet, dass** diese einen Anschlag (22) umfasst, der den Lauf des Spoilers nach oben begrenzt, wobei dieser Anschlag (22) geeignet ist, um den Übergang des Spoilers (8) aus seiner oberen Stellung in seine eingezogene Stellung zu verhindern.

8. Stoßstange nach einem der Ansprüche 1 bis 7, **dadurch gekennzeichnet, dass** diese hinter dem Stoßfänger (7) ein Lager (24) aufweist, und dass der Spoiler (8) nach vorne eine Lippe (21) zeigt, die sich bei eingezogener Stellung in besagtem Lager (24) platziert, um den Spoiler (8) in dieser eingezogenen Stellung zu halten.

9. Stoßstange nach einem der Ansprüche 1 bis 8, **dadurch gekennzeichnet, dass** diese eine Rückholvorrichtung (16) umfasst, die den Spoiler (8) fortwährend nach oben drängt.

10. Stoßstange nach Anspruch 9, **dadurch gekennzeichnet, dass** besagte Rückholvorrichtung (16) eine Zugfeder (17) umfasst, die auf dem Spoiler (8) verankert ist, wobei diese Feder (17) tariert ist, um in Abhängigkeit von der Geschwindigkeit des Fahrzeugs den Übergang des Spoilers (8) aus seiner oberen Stellung in seine untere Stellung und vice versa zu gestatten.

11. Stoßstange nach einem der Ansprüche 1 bis 10, **dadurch gekennzeichnet, dass** diese einen Anschlag (19) umfasst, der den Lauf des Spoilers (8) nach unten begrenzt.

## Claims

1. A motor vehicle bumper which comprises a shield (7) and a spoiler (8) hinged between two positions of stable equilibrium, namely a high position in which it projects at least in part downwards from the shield (7), and a low position in which it extends the shield (7) in a downward direction, the bumper being **characterized in that** the spoiler (8) is suitable for adopting a third position of stable equilibrium referred to as a "retracted" position, in which it is fully retracted behind the shield (7).

2. A bumper according to claim 1, **characterized in that** the spoiler (8) is mounted both to pivot about a transverse axis, and to slide in a longitudinal direction between a front position in which it is close to the shield (7) and a rear position in which it is spaced apart therefrom.

3. A bumper according to claim 1 or claim 2, **characterized in that** it includes a clutch mechanism (25) suitable, under certain "retraction" conditions, for enabling the spoiler (8) to pass from its high position towards its retracted position, and under certain "deployment" conditions, to allow the spoiler (8) to pass from its retracted position towards its high position.

4. A bumper according to claims 2 and 3 taken together, **characterized in that** the clutch mechanism (25) is suitable for causing the spoiler (8) to pass from its front position towards its rear position, and vice versa.

5. A bumper according to claim 4, **characterized in that** said clutch mechanism (25) comprises a rod (28) having an inside end slidably engaged with the spoiler (8), the rod (28) being slidably mounted between a deployed position in which it entrains the spoiler (8) towards its front position, and a retracted position in which it enables the spoiler (8) to occupy its rear position.

6. A bumper according to claim 5, **characterized in that** the clutch mechanism (25) includes a return spring (34) which continuously urges the rod (28) towards its deployed position.

7. A bumper according to any one of claims 1 to 6, **characterized in that** it includes an abutment (22) which limits the forward stroke of the spoiler, said abutment (22) being suitable for preventing the spoiler (8) from passing from its high position towards its retracted position.

8. A bumper according to any one of claims 1 to 7, **characterized in that** it defines a housing (24) behind the shield (7), and **in that** the spoiler (8) presents a forward lip (21) which, in the retracted position, is placed in said housing (24) to hold the spoiler (8) in the retracted position.

9. A bumper according to any one of claims 1 to 8, **characterized in that** it includes a return device (16) continuously urging the spoiler (8) upwards.

10. A bumper according to claim 9, **characterized in that** said return device (16) comprises a traction spring (17) anchored to the spoiler (8), the spring (17) being tared to enable the spoiler (8) to pass from its high position towards its low position, and vice versa, as a function of the speed of the vehicle.

11. A bumper according to any one of claims 1 to 10, **characterized in that** it includes an abutment (19) which limits the downward stroke of the spoiler (8).
